# EUROPEAN PATENT APPLICATION

(11) **EP 4 776 601 A1**
(43) Date of publication of application: **15.07.2026**
(21) Application number: 24864043.5
(22) Date of filing: 09.04.2024
(51) Int. Cl.: H04L 69/16, H04W 16/14

(54) **DATA TRANSMISSION METHOD, COMMUNICATION APPARATUS AND STORAGE MEDIUM**

(30) Priority: 11.09.2023 CN 202311170846
(71) Applicant: ZTE Corporation, Shenzhen, Guangdong 518057 (CN)
(72) Inventor: LI, Yan, Shenzhen, Guangdong 518057 (CN); ZHANG, Yaodong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/086748
(87) International publication number: WO 2025/055317

(57) **Abstract**

The embodiments of the present disclosure provide a data transmission method, a communication apparatus, and a storage medium. The data transmission method comprises: receiving a first frame sent by a second AP, the second AP and a first AP belonging to the same multi-AP cooperation group, the first frame comprising a group member identifier of the first AP in the multi-AP cooperation group, and the first frame being used for allocating a target channel resource to the first AP on the basis of the group member identifier; and performing data transmission on the target channel resource.

## Description

The present disclosure claims priority to the Chinese Patent Application No. 202311170846.5, filed on September 11, 2023, the entire content of which is incorporated herein by reference.

### TECHNICAL FIELD

The present disclosure relates to the technical field of communications, and in particular, to a data transmission method, a communication apparatus, and a storage medium.

### BACKGROUND

The basic principle of the multi-access point (access point, AP) coordination (Multi-AP) technology is that after an AP (e.g., referred to as a sharing AP) acquires a channel access authority, it allocates the acquired sub-channel resource to itself and other surrounding APs (e.g., referred to as shared APs) that belong to a same channel. The shared AP perform a data transmission on the allocated channel resource.

### SUMMARY

In one aspect, a data transmission method is provided, which is applied to a first AP, and the data transmission method includes: receiving a first frame sent from a second AP, where the second AP and the first AP belong to a same multi-AP coordination group, the first frame includes a member identifier of the first AP in the multi-AP coordination group, and the first frame is used for allocating a target channel resource to the first AP based on the member identifier; and performing a data transmission on the target channel resource.

In another aspect, a data transmission method is provided, which is applied to a second AP, and the data transmission method includes: sending a first frame to a first AP; where the second AP and the first AP belong to a same multi-AP coordination group, the first frame includes a member identifier of the first AP in the multi-AP coordination group, and the first frame is used for allocating a target channel resource to the first AP based on the member identifier.

In yet another aspect, a communication apparatus is provided, and the communication apparatus includes: a receiving module and a transmitting module. The receiving module is configured to: receive a first frame sent from a second AP; the second AP and a first AP belong to a same multi-AP coordination group, the first frame includes a member identifier of the first AP in the multi-AP coordination group, and the first frame is used for allocating a target channel resource to the first AP based on the member identifier. The transmitting module is configured to: perform a data transmission on the target channel resource.

In yet another aspect, a communication apparatus is provided, and the communication apparatus includes: a sending module. The sending module is configured to: send a first frame to a first AP; a second AP and the first AP belong to a same multi-AP coordination group; the first frame includes a member identifier of the first AP in the multi-AP coordination group, and the first frame is used for allocating a target channel resource to the first AP based on the member identifier.

In yet another aspect, a computer-readable storage medium is provided, where computer program instructions are stored on the computer-readable storage medium, and the computer program instructions, upon being executed by a processor, implement the above-mentioned data transmission method.

In yet another aspect, a computer program product is provided, where the computer program product includes computer program instructions, and the computer program instructions, upon being executed by a processor, implement the above-mentioned data transmission method.

### BRIEF DESCRIPTION OF THE DRAWINGS

In order to illustrate the solutions in the present disclosure more clearly, the drawings required for use in some embodiments of the present disclosure are briefly introduced below. It is obvious that the drawings in the following description are merely some drawings of some embodiments of the present disclosure, and those skilled in the art may obtain other drawings based on these drawings.
FIG. 1 is a schematic diagram of a format of a TIM field according to some embodiments of the present disclosure.
FIG. 2 is a schematic diagram of resource allocation of a C-OFDMA technology according to some embodiments of the present disclosure.
FIG. 3 is a schematic diagram of resource allocation for different APs according to some embodiments of the present disclosure.
FIG. 4 is a schematic diagram of a network architecture according to some embodiments of the present disclosure.
FIG. 5 is a flow schematic diagram of a data transmission method according to some embodiments of the present disclosure.
FIG. 6 is a schematic diagram of an AP belonging to multiple groups according to some embodiments of the present disclosure.
FIG. 7 is an interaction schematic diagram in a case of joining according to some embodiments of the present disclosure.
FIG. 8 is an interaction schematic diagram in a case of exiting according to some embodiments of the present disclosure.
FIG. 9 is an interaction schematic diagram in another case of exiting according to some embodiments of the present disclosure.
FIG. 10 is a schematic diagram of a network discovery according to some embodiments of the present disclosure.
FIG. 11 is a schematic diagram of another network discovery according to some embodiments of the present disclosure.
FIG. 12 is a structural schematic diagram of a communication apparatus according to some embodiments of the present disclosure.
FIG. 13 is a structural schematic diagram of another communication apparatus according to some embodiments of the present disclosure.
FIG. 14 is a composition schematic diagram of yet another communication apparatus according to some embodiments of the present disclosure.

### DETAILED DESCRIPTION

The solutions of the present disclosure will be described below clearly and completely with reference to the drawings in the present disclosure, and obviously, the described embodiments are only a part of the embodiments of the present disclosure, but not all of the embodiments. Based on the embodiments in the present disclosure, all other embodiments obtained by those of ordinary skill in the art without creative work shall fall within the protection scope of the present disclosure.

It should be noted that in the present disclosure, terms such as "exemplary/exemplarily" or "for example/such as/e.g." are used to present examples, illustrations, or explanations. Any embodiment or design solution described as "exemplary/exemplarily" or "for example/such as/e.g." in the present disclosure should not be interpreted as being more preferred or advantageous than other embodiments or design solutions. Rather, the use of terms such as "exemplary/exemplarily" or "for example/such as/e.g." is intended to present related concepts in a specific manner.

In the following, terms such as "first" and "second" are used for descriptive purposes only and cannot be understood as indicating or implying relative importance or implicitly indicating the quantity of the indicated technical feature. Thus, features defined with "first", "second", etc., may explicitly or implicitly include one or more such features.

In the description of the present disclosure, unless otherwise specified, "/" means "or", e.g., A/B may represent A or B. The "and/or" herein merely describes an association relationship between associated objects, indicating that three relationships may exist, e.g., A and/or B may represent: A only, B only, and both A and B. Moreover, "at least one" means one or more, and "multiple" means two or more.

In related standards of the multi-access point (access point, AP) coordination (Multi-AP) technology, in a case where a sharing AP allocates channel resources, a situation may occur where different APs contend for the channel resources, leading to conflicts.

To facilitate the understanding of the technical solutions provided in the embodiments of the present disclosure, a brief introduction of the related art of the present disclosure is first provided. The brief introduction is as follows.

### IEEE 802.11 architecture.

The IEEE 802.11 architecture may include components such as: a basic service set (BSS), a distribution system (DS), and a distribution system medium (DSM), etc.; these components interact with each other to provide a wireless local area network (WLAN), and the WLAN may provide a wireless access service for a station (STA) in the BSS. The DS may provide a connection service for the BSS, for example, it may connect to different BSSs; for another example, the DS may transmit a data frame in the BSS to other networks, thereby enabling the STA to access an upper layer network (e.g., a core network or the Internet, etc.) through the DS. Furthermore, the transmission medium used by the DS, i.e., the DSM, may be a wired medium and/or a wireless medium. For example, the wired medium may be an optical fiber or a cable, etc., and the wireless medium may be a wireless electromagnetic wave.

Furthermore, a specification for information being transmitted in the wired medium may be a specification specified by the IEEE 802.3 protocol, a specification specified by a protocol related to a passive optical network (PON), or a specification defined by other protocols related to wired transmissions, which is not limited in the embodiments of the present disclosure. It may be understood that, for information transmitted in a wired medium mentioned below, if not otherwise stated, it may follow the related protocols described above, which is uniformly explained here and will not be repeated below.

### BSS.

The BSS is a basic component unit (or referred to as a block) in the WLAN. The BSS may include multiple members, and the multiple members may be connected to each other via a wireless medium. Members in the BSS may be classified into the aforementioned AP and STA (or referred to as a non-AP (non AP) STA). For example, the AP may refer to an entity that includes an STA function and a distribution system access function (DSAF).

### Association identifier (AID).

A 16-bit identifier allocated by the AP to an associated STA may serve as an identity identifier of the STA in this BSS. In the BSS, an AID field contains a value with a length of 16-bit specified by the AP during connection, and the value may uniquely identify information of a connected STA.

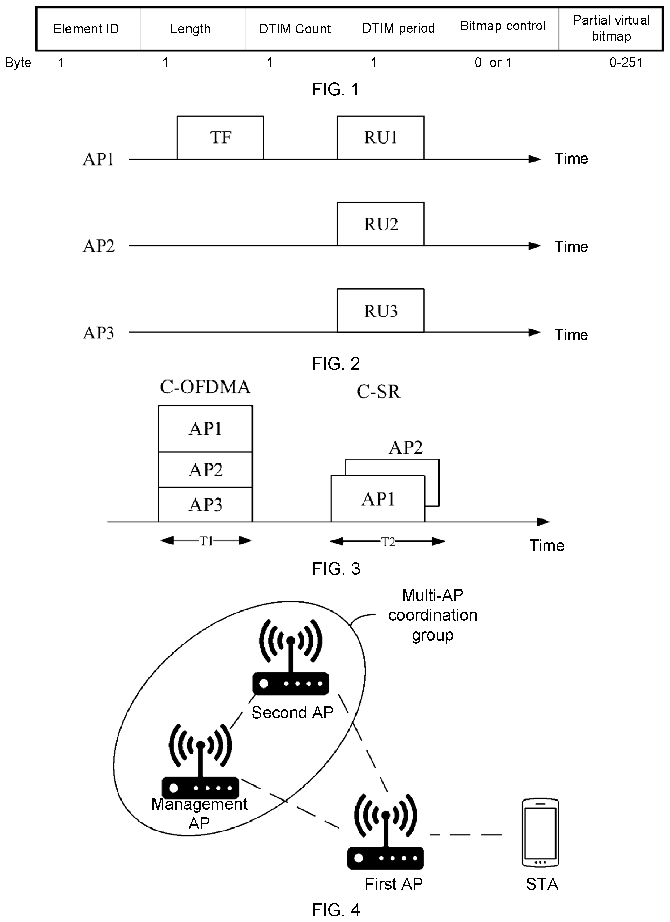

The AID is widely used in functions such as channel state (sounding) collection, channel resource allocation via a trigger frame (TF), and unicast buffer indication, etc. Taking the trigger frame and the unicast buffer indication functions as examples, they are described respectively as follows.
(1) Trigger frame: after STAs are connected to the AP, the AP uses 12-bit AID information (abbreviated as AID12) to identify each STA. In a trigger frame, the AP uses the AID12 identifier to allocate a channel resource for each STA.
(2) Unicast buffer indication: in a beacon frame (beacon) which contains a traffic information indication (traffic indication message, TIM) field, sent from the AP, the AP uses AID information to indicate a buffer state of each STA. A format of the TIM field is shown in FIG. 1. The element ID is an identifier of the TIM field, and the length is a length of the field. DTIM Count (count) represents a count of beacon frames before a traffic transmission information indication (delivery traffic indication message, DTIM) appearing in this field appears, where a DTIM of 0 indicates that this TIM is a DTIM, and the DTIM of other values indicates that the field is a TIM. DTIM period represents a frequency at which the field appears (which is an integer multiple of a beacon frame period). Bitmap control contains control information of AID, a partial virtual bitmap has a length of 0-251 bytes, each bit indicates whether there is corresponding STA unicast data buffer information, a bit of 1 indicates buffer information, a bit of 0 indicates no buffer, and it indicates buffer information of a maximum of 2007 STAs.

In Multi-AP technologies, such as coordination orthogonal frequency-division multiple access (C-OFDMA), coordination spatial reuse (C-SR), coordination time division multiple address (C-TDMA), and other technologies, the basic principle thereof is to allocate a channel resource acquired by a sharing AP to other shared APs, and the shared AP to which the channel is allocated communicates on its corresponding channel resource. The channel resource may be a frequency domain resource, a time domain resource, a spatial domain resource, etc.

FIG. 2 is a schematic diagram of resource allocation according to a C-OFDMA technology of the present disclosure. As shown in FIG. 2, AP1 is a sharing AP, which allocates different channel resources to AP2 and AP3 (shared APs) via a trigger frame (TF), and the channel resource may be represented as a resource unit (RU), e.g., AP1 corresponds to RU1, AP2 corresponds to RU2, and AP3 corresponds to RU3. After a certain time interval, AP1, AP2, and AP3 transmit a presentation protocol data unit (PPDU) data packet on their respective corresponding RUs, respectively.

Furthermore, since there is a peer-to-peer relationship between different APs, each AP may serve as a sharing AP and a shared AP, i.e., each AP may contend for a channel resource and then send a trigger frame to allocate the channel resource to other APs. As shown in FIG. 3, in a period of time T1, AP1 acquires a channel resource, and as a sharing AP, allocates a frequency domain resource to AP1, AP2, and AP3, and then the three APs perform the synchronous transmission of data by using the C-OFDMA technology. In a period of time T2, AP3 acquires a channel resource, and as a sharing AP, allocates a frequency domain resource to AP1 and AP2, and then AP1 and AP2 perform the synchronous transmission of data by using the C-SR technology.

The conventional OFDMA technology is applicable to a single BSS scenario, where the AP allocates different channel resources to associated STAs, and then the STAs may perform uplink and downlink data communication on the allocated corresponding channel resources. During a channel resource allocation process, the AP may identify different STAs via AIDs.

For the multi-AP coordination scenario, relevant standards lack information similar to the AID identifier to indicate the target of the resource allocation, therefore, in a case where a sharing AP performs channel resource allocation, it cannot accurately perform directed resource allocation for a certain shared AP, and a situation may occur where different APs contend for the channel resources, leading to conflicts.

Based on this, the embodiments of the present disclosure provide a data transmission method, and in this communication method, a first AP may receive a first frame sent from a second AP in a same multi-AP coordination group, and perform a data transmission on a target channel resource indicated by a member identifier in the first frame. That is, the first AP corresponds to a member identifier in the multi-AP coordination group, thus, when performing channel resource allocation, the first AP may determine its corresponding target channel resource based on the member identifier. In this way, it may be ensured that each AP in the multi-AP coordination may communicate on its corresponding channel resource, avoiding channel occupancy conflicts.

Referring to FIG. 4, FIG. 4 is a schematic diagram of a network architecture involved in the embodiments of the present disclosure. As shown in FIG. 4, the network architecture includes: a first AP, a second AP, a management AP (master AP), and a station (STA).

The AP may be a device having a WLAN chip or a WLAN system on a chip (SoC) chip. For example, the AP may be a device having a DSAF function among the related devices in the introduction of the STA described above, such as a mobile phone that may access the core network described above, or a computer that may access the Internet described above. For another example, the AP may be a communication entity such as a communication server, a router, a switch, or a network bridge, etc.; or, the AP may include various forms of macro base station, micro base station, relay station, etc., and pf course, the AP may also be a chip and a processing system in these various forms of devices, which is not limited in the embodiments of the present disclosure.

The STA may refer to a terminal device having a wireless communication function and capable of accessing a WLAN network. The terminal device may be a device having a wireless transceiver function, which may be deployed on land (including indoor or outdoor, handheld, wearable, or vehicle-mounted); may also be deployed on water (such as on a ship, etc.); and may also be deployed in the air (for example, on an airplane, a balloon, and a satellite, etc.). The terminal device may be a workstation, a mobile phone, a tablet computer (Pad), a computer with a wireless transceiver function, a virtual reality (VR) terminal device, an augmented reality (AR) terminal device, a wireless terminal in industrial control, a vehicle-mounted terminal device, a wireless terminal in unmanned driving, a wireless terminal in remote medical, a wireless terminal in smart grid, a wireless terminal in transportation safety, a wireless terminal in smart city, a wireless terminal in smart home, a wearable terminal device, or an internet of things (IoT) terminal, etc.

In some embodiments, the management AP is a central control device of the multi-AP coordination group, and the second AP is a sharing AP in the multi-AP coordination group. The management AP has a specific identifier and may broadcast a beacon frame to inform its presence. An AP within the signal coverage range of the management AP may request the management AP to join the multi-AP coordination group. After the first AP joins the multi-AP coordination group, it may serve as a shared AP to acquire a channel resource allocated by the second AP in the multi-AP coordination group.

In some embodiments, the second AP and the management AP described above may be the same AP or different APs. The figure shows the second AP and the management AP as different APs.

In some embodiments, the above management AP, first AP, and second AP may be non-MLD APs or AP MLDs.

It should be noted that the network architecture and application scenarios described in the embodiments of the present disclosure are intended to illustrate the technical solutions of the embodiments of the present disclosure more clearly, and do not constitute a limitation on the technical solutions provided in the embodiments of the present disclosure, and those ordinary skilled in the art may known that as network architectures evolve and new service scenarios emerge, the technical solutions provided in the embodiments of the present disclosure are also applicable to similar technical problems.

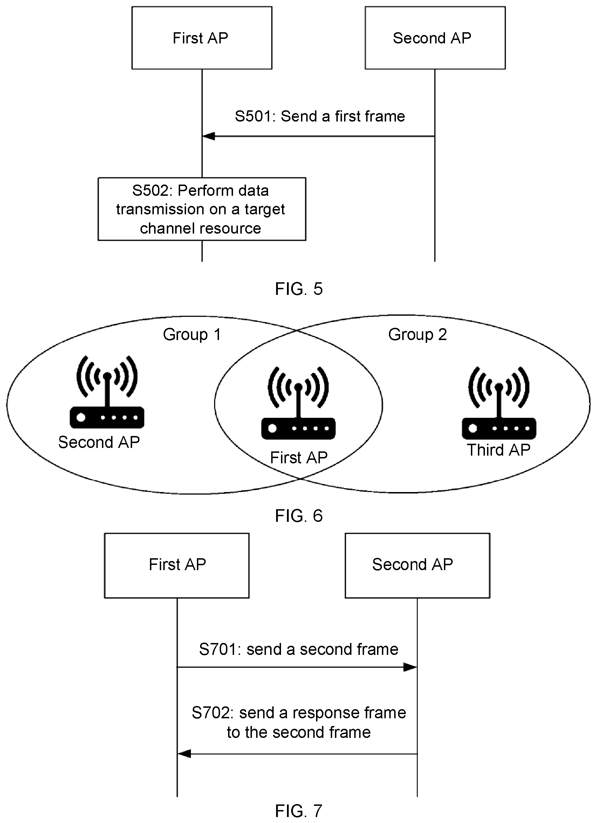

FIG. 5 is a flow schematic diagram of a data transmission method according to the embodiments of the present disclosure. Exemplarily, the data transmission method provided in the present disclosure may be applied to the network architecture shown in FIG. 4, for example, it may be applied to the first AP in FIG. 4.

As shown in FIG. 5, the data transmission method provided in the present disclosure may, for example, include the following S501 and S502.

In S501: the second AP sends a first frame to the first AP; correspondingly, the first AP receives the first frame sent from the second AP.

The second AP and the first AP belong to the same multi-AP coordination group. The first frame includes a member identifier of the first AP in the multi-AP coordination group, and the first frame is used for allocating a target channel resource to the first AP based on the member identifier.

In S502: the first AP performs a data transmission on the target channel resource.

For the above S501 and S502, after the second AP acquires a channel resource access authority, it may allocate channel resources according to members in the multi-AP coordination group, and may send allocation information of channel resources to surrounding APs by broadcasting the first frame. Different channel resources correspond to different member identifiers, and the first AP receiving the first frame may determine the target channel resource according to its own member identifier, and then perform the data transmission with devices within its own BSS, on the target channel resource.

In some embodiments, the first frame is a trigger frame, or another control frame or management frame having a scheduling management function.

In some embodiments, the member identifier is an identifier allocated to the first AP by a management AP in the multi-AP coordination group, or is a unique identifier of the first AP.

The unique identifier may be a basic service set identifier (BSSID), a service set identifier (SSID), a multi-link device media access control address (MLD MAC address), etc. Alternatively, the unique identifier may be a part of the BSSID, a part of the MLD MAC address, or a combination or derivation of the above information, the content of the unique identifier is not limited in the embodiments of the present disclosure.

It should be noted that, in some scenarios, the first AP may belong to multiple multi-AP coordination groups. For example, as shown in FIG. 6, the first AP belongs not only to group 1 but also to group 2. Therefore, the first AP may not only receive a first frame for channel resource allocation sent from a sharing AP (the second AP) in group 1, but may also receive a first frame for channel resource allocation sent from a sharing AP (a third AP) in group 2.

In a case where the member identifier is an identifier allocated by the management AP, the above first frame includes not only the member identifier of the first AP but also information of the multi-AP coordination group. Since the member identifier allocated to the first AP may be inconsistent in different groups, the first AP may distinguish the target channel resource specified by the first frame is allocated by which multi-AP coordination group, according to the information of the multi-AP coordination group. That is, the first AP may perform communication within its own BSS on the target channel resource specified by group 1, and may also perform communication within its own BSS on the target channel resource specified by group 2.

It should be understood that, in a case where the member identifier is an identifier allocated by the management AP, the member identifier of the first AP in group 1 may be consistent or inconsistent with the member identifier of the first AP in group 2. The target channel resource specified by group 1 and the target channel resource specified by group 2 may be the same or different, which is not limited in the embodiments of the present disclosure.

In a case where the member identifier is a unique identifier, since the unique identifier is globally unique, the above first frame may not include the information of the multi-AP coordination group, and the first AP may still perform the data transmission on the target channel resource allocated by the first frame, this may effectively reduce the overhead during the information transmission. In addition, for the first AP, in a case where the number of multi-AP coordination groups that the first AP joins is relatively large, the AP does not need to maintain related information of multiple groups and the corresponding member identifiers, and it can only store a member identifier that is globally unique, which may effectively reduce the space resource occupation of the first AP.

In some scenarios, if the first AP does not belong to the multi-AP coordination group, the first AP may request to join the multi-AP coordination group to facilitate subsequent channel resource allocation. The following description is made by taking the second AP and the management AP as the same AP as an example, in conjunction with the drawings and the embodiments of the specification.

FIG. 7 is an interaction schematic diagram in a case of joining according to the embodiments of the present disclosure. As shown in FIG. 7, it includes S701 and S702.

In S701: the first AP sends a second frame to a management AP (the second AP) in the multi-AP coordination group; correspondingly, the second AP (the management AP) receives the second frame sent from the first AP.

The second frame is used for requesting to join the multi-AP coordination group.

In S702: the second AP sends a response frame to the second frame to the first AP; correspondingly, the first AP receives the response frame sent from the second AP.

For the above S701 and S702, as described above, the management AP is a central control device of the multi-AP coordination group, the management AP may broadcast a beacon frame around, and the beacon frame carries information of the multi-AP coordination group. The first AP may know the existence of the multi-AP coordination group through the beacon frame broadcast by the management AP. Then, the first AP may send the second frame for requesting to join, to the management AP; correspondingly, the management AP may acquire the second frame for requesting to join the multi-AP coordination group. If the management AP determines that the first AP meets a condition for joining (for example, having the same function), a response frame to the second frame may be fed back to the first AP, and the response frame is used to indicate agreement to the first AP joining. Conversely, if the first AP does not meet the condition for joining, a response frame for rejecting joining the multi-AP coordination group may be fed back to the first AP, and the response frame may include information such as a rejection reason, etc.

In some embodiments, in a case where the member identifier is an identifier allocated by the management AP to the first AP, the response frame to the second frame includes the member identifier.

It should be understood that, if the member identifier is allocated by the management AP, the management AP may allocate the member identifier to the first AP, according to a number of managed APs. For example, the multi-AP coordination group managed by the management AP includes three APs, and the member identifiers are AP1, AP2, and AP3 respectively, then for the first AP, the management AP may allocate AP4 as a member identifier in order, and feed back AP4 to the first AP through the response frame.

In some embodiments, in a case where the member identifier is a unique identifier of the first AP, in the embodiments of the present disclosure, after S702, S703 may further be included: in response to the response frame, determining that its own unique identifier is the member identifier.

It should be understood that, if the member identifier is the unique identifier, in an implementation, the management AP may inform the first AP of the member identifier, by carrying indication information in the response frame. For example, the response frame includes an indication field, where a value of the indication field is 1, which may be considered as carrying the indication information, and the first AP may determine that the unique identifier is its own member identifier in the multi-AP coordination group. In another implementation, a pre-configuration may be adopted, that is, after the first AP receives the response frame agreeing to join, it determines by itself that its own unique identifier is the member identifier.

In some embodiments, after agreeing the first AP to join, that is, in a case where the first AP belongs to the multi-AP coordination group, the first AP may broadcast a sixth frame for a network discovery. Exemplarily, the sixth frame is a beacon frame, and the beacon frame carries information of the multi-AP coordination group and the member identifier. Conversely, in a case where the first AP does not belong to the multi-AP coordination group, the sixth frame broadcast by the first AP does not carry information of the multi-AP coordination group and the member identifier.

In some embodiments, the information of the multi-AP coordination group includes at least one of: an identifier of the multi-AP coordination group, a member identifier of each member in the multi-AP coordination group.

Below, in combination with the embodiments and the drawings of the specification, an interaction process between the first AP and the management AP in a case where the first AP exits the multi-AP coordination group, is described in detail.

It should be noted that, the exit of the first AP from the multi-AP coordination group includes two implementations. An implementation is that the first AP actively exits, and another implementation is that the first AP passively exits, described as follows.

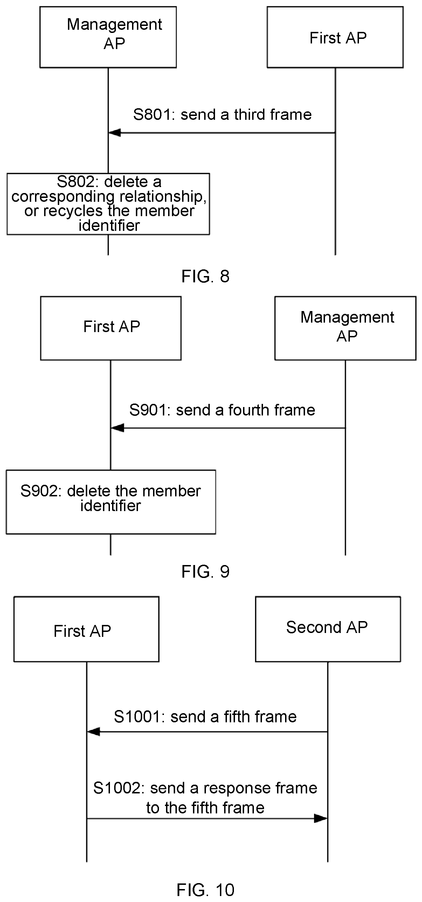

In an implementation, FIG. 8 is an interaction schematic diagram in a case of exiting according to the embodiments of the present disclosure. As shown in FIG. 8, it includes S801 and S802.

In S801: the first AP sends a third frame to a management AP in the multi-AP coordination group; correspondingly, the management AP (the second AP) receives the third frame.

The third frame is used for notifying the management AP that the first AP exits the multi-AP coordination group.

In S802: in response to the third frame, the second AP (the management AP) deletes a corresponding relationship between the member identifier and the first AP, or recycles the member identifier.

For the above S801 and S802, in a case where it needs to exit the multi-AP coordination group, the first AP may actively send the third frame to the management AP. And, the first AP may delete the member identifier stored by itself. Correspondingly, after receiving the third frame, the management AP may, in response to the third frame, delete the corresponding relationship between the member identifier of the first AP and the first AP, or in other words, recycle the member identifier, and when another AP joins the multi-AP coordination group, the recycled member identifier may be allocated to the another AP.

For example, the member identifier allocated by the management AP to the first AP is AP4, and if the first AP exits the multi-AP coordination group, the management AP recycles the member identifier AP4. When a new AP joins, the management AP may allocate AP4 to the newly joined AP.

In another implementation, FIG. 9 is an interaction schematic diagram in another case of exiting according to the embodiments of the present disclosure. As shown in FIG. 9, it includes S901 and S902.

In S901: the second AP (the management AP) sends a fourth frame to the first AP; correspondingly, the first AP receives the fourth frame sent from the management AP.

The fourth frame is used for indicating the first AP to exit the multi-AP coordination group.

In S902: the first AP deletes the member identifier in response to the fourth frame.

For the above S901 and S902, the management AP may send the fourth frame to the first AP to indicate the first AP to exit the multi-AP coordination group. And, the management AP may delete the corresponding relationship between the member identifier and the first AP, or recycle the member identifier of the first AP. Correspondingly, after receiving the fourth frame, the first AP may delete the member identifier, to complete the exiting process.

In some other scenarios, if the second AP and the management AP are not the same AP, since the first AP is a newly joined AP, the second AP does not have the member identifier of the first AP yet. When the second AP acquires a channel access authority (i.e., becomes a sharing AP), the second AP cannot allocate a channel resource to the first AP at this time. Therefore, the second AP may acquire related information of the first AP through active acquisition or passive acquisition.

In conjunction with FIG. 10, the case of active acquisition is described, FIG. 10 is a schematic diagram of a network discovery according to the present disclosure, as shown in FIG. 10, it includes S1001 and S1002.

In S1001: the second AP sends a fifth frame to the first AP; correspondingly, the first AP receives the fifth frame.

The fifth frame is used for requesting the member identifier of the first AP in the multi-AP coordination group.

In S1002: the first AP sends a response frame to the fifth frame, to the second AP; correspondingly, the second AP receives the response frame to the fifth frame.

For the above S1001 and S1002, when the first AP is within a signal coverage range of the second AP, the second AP may discover the existence of the first AP. Then, the second AP may send the fifth frame to the first AP, to request an identity of the first AP in the multi-AP coordination group. Correspondingly, the first AP sends the response frame to the fifth frame, to the second AP. After receiving the response frame, the second AP may store member information of the first AP, so as to allocate a channel resources to the first AP subsequently.

In some embodiments, the fifth frame is a probe request frame, and the response frame to the fifth frame is a probe response frame.

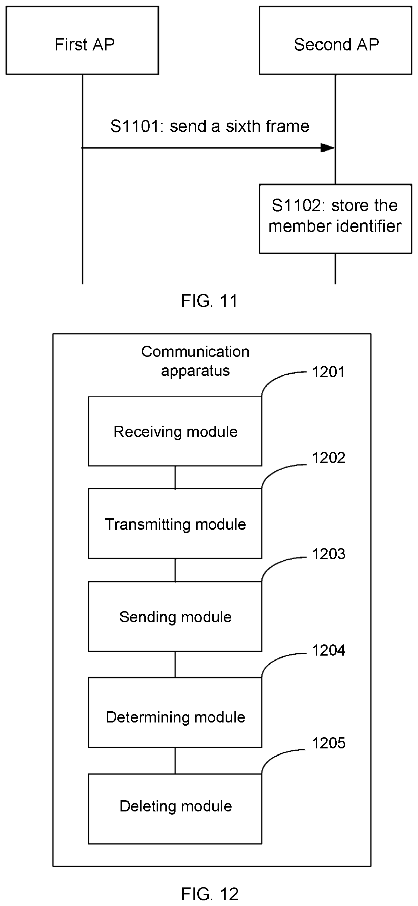

In conjunction with FIG. 11, the case of passive acquisition is described, FIG. 11 is a schematic diagram of another network discovery according to the present disclosure, as shown in FIG. 11, it includes S1101 and S1102.

In S1101: the first AP sends a sixth frame; correspondingly, the second AP receives the sixth frame.

The sixth frame includes information of the multi-AP coordination group and the member identifier.

In S1102: the second AP stores the member identifier of the first AP.

For the above S1101 and S1102, as described above, the first AP may continuously broadcast the sixth frame around. And, in a case where the first AP belongs to the multi-AP coordination group, the sixth frame carries information of the multi-AP coordination group and the member identifier. If the second AP is within a signal coverage range of the first AP, the second AP may receive the sixth frame sent from the first AP, and in a case of determining that the information of the multi-AP coordination group to which the first AP belongs is consistent with the multi-AP coordination group to which the second AP itself belongs, acquire the member identifier of the first AP, and record and store it, so as to allocate a channel resource to the first AP subsequently.

In some embodiments, the above sixth frame is a beacon frame.

The embodiments of the present disclosure provide a data transmission method, in the data transmission method, a first AP may receive a first frame sent from a second AP in a same multi-AP coordination group, and perform a data transmission on a target channel resource indicated by a member identifier in the first frame. That is, the first AP corresponds to a member identifier in the multi-AP coordination group, thus, when performing channel resource allocation, the first AP may determine its corresponding target channel resource based on the member identifier. In this way, it may be ensured that each AP in the multi-AP coordination may communicate on its corresponding channel resource, thereby avoiding channel occupancy conflicts.

Furthermore, a manner of using a unique identifier as the member identifier, may effectively reduce overhead of the data transmission during the channel resource allocation process. In addition, for the AP itself, it does not need to store member identifiers corresponding to multiple groups, which may effectively reduce occupation of its own space resources.

It may be understood that, for a communication apparatus (which may be the aforementioned management AP, first AP, or second AP) to implement the above functions, it includes corresponding hardware structures and/or software modules for performing each function. Those skilled in the art should easily realize that, in conjunction with the algorithm steps of the various examples described in the embodiments of the present disclosure, the present disclosure can be implemented in the form of hardware or a combination of hardware and computer software. Whether a certain function is performed by hardware or by computer software driving hardware, depends on the specific applications and design constraint conditions of the technical solutions. A professional technician may use different methods for each specific application to implement the described functions, but such an implementation should not be considered as exceeding the scope of the present disclosure.

The embodiments of the present disclosure may divide the communication apparatus into functional modules according to the above method embodiments; for example, each functional module may be divided corresponding to each function, or two or more functions may also be integrated into a functional module. The above integrated modules may be implemented in the form of hardware or in the form of software. It should be noted that the division of modules in the embodiments of the present disclosure is schematic, and is only a logical function division; there may be other division manners in actual implementations. The following describes an example of each functional module being divided corresponding to each function.

FIG. 12 is a structural schematic diagram of a communication apparatus according to the embodiments of the present disclosure, and the communication apparatus may perform the data transmission method provided in the above method embodiments. As shown in FIG. 12, the communication apparatus includes: a receiving module 1201 and a transmitting module 1202.

The receiving module 1201 is configured to receive a first frame sent from a second AP, where the second AP and a first AP belong to a same multi-AP coordination group, the first frame includes a member identifier of the first AP in the multi-AP coordination group, and the first frame is used for allocating a target channel resource to the first AP based on the member identifier.

The transmitting module 1202 is configured to perform a data transmission on the target channel resource.

In some embodiments, the first frame is a trigger frame, or another control frame or management frame having a scheduling management function.

In some embodiments, the member identifier is an identifier allocated to the first AP by a management AP in the multi-AP coordination group, or is a unique identifier of the first AP.

In some embodiments, in a case where the member identifier is the identifier allocated to the first AP by the management AP, the first frame further includes information of the multi-AP coordination group.

In some embodiments, the above communication apparatus further includes: a sending module 1203. The sending module 1203 is configured to send a second frame to a management AP in the multi-AP coordination group. The second frame is used for requesting to join the multi-AP coordination group. The receiving module 1201 is further configured to receive a response frame sent from the management AP to the second frame. The response frame is used for indicating agreement to the first AP joining the multi-AP coordination group.

In some embodiments, in a case where the member identifier is an identifier allocated to the first AP by the management AP, the response frame includes the member identifier.

In some embodiments, in a case where the member identifier is a unique identifier of the first AP, the above communication apparatus further includes: a determining module 1204. The determining module 1204 is configured to: in response to the response frame, determine that the unique identifier of the first AP itself is the member identifier.

In some embodiments, the above communication apparatus further includes: a deleting module 1205. The sending module 1203 is further configured to send a third frame to a management AP in the multi-AP coordination group. The third frame is used for notifying the management AP that the first AP exits the multi-AP coordination group. The deleting module 1205 is configured to delete the member identifier.

In some embodiments, the receiving module 1201 is further configured to receive a fourth frame sent from a management AP in the multi-AP coordination group. The fourth frame is used for indicating the first AP to exit the multi-AP coordination group. The deleting module 1205 is further configured to delete the member identifier.

In some embodiments, the receiving module 1201 is further configured to receive a fifth frame sent from the second AP. The fifth frame is used for requesting the member identifier of the first AP in the multi-AP coordination group. The sending module 1203 is further configured to send a response frame to the fifth frame to the second AP. The response frame includes information of the multi-AP coordination group and the member identifier.

In some embodiments, the fifth frame is a probe request frame, and the response frame to the fifth frame is a probe response frame.

In some embodiments, the sending module 1203 is further configured to: in a case where the first AP belongs to the multi-AP coordination group, send a sixth frame. The sixth frame includes information of the multi-AP coordination group and the member identifier.

In some embodiments, the sixth frame is a beacon frame.

In some embodiments, the information of the multi-AP coordination group includes at least one of: an identifier of the multi-AP coordination group, a member identifier of each member in the multi-AP coordination group.

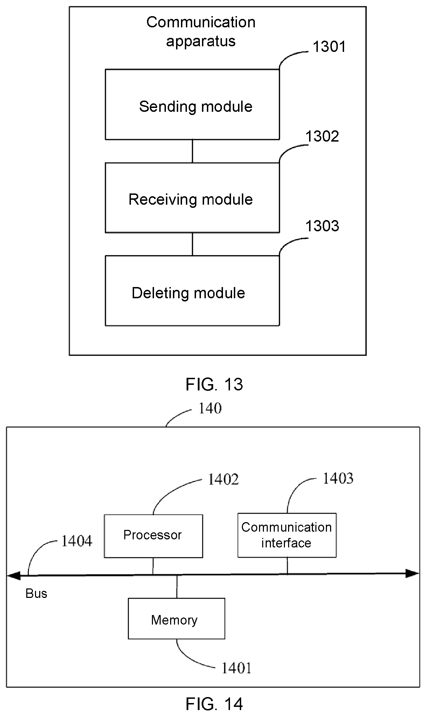

FIG. 13 is a structural schematic diagram of another communication apparatus according to the embodiments of the present disclosure, and the communication apparatus may perform the data transmission method provided in the above method embodiments. As shown in FIG. 13, the communication apparatus includes: a sending module 1301.

The sending module 1301 is configured to send a first frame to a first AP. A second AP and the first AP belong to a same multi-AP coordination group, the first frame includes a member identifier of the first AP in the multi-AP coordination group, and the first frame is used for allocating a target channel resource to the first AP based on the member identifier.

In some embodiments, the first frame is a trigger frame, or another control frame or management frame having a scheduling management function.

In some embodiments, the member identifier is an identifier allocated to the first AP by a management AP of the multi-AP coordination group, or is a unique identifier of the first AP.

In some embodiments, in a case where the member identifier is an identifier allocated to the first AP by a management AP of the multi-AP coordination group, the first frame further includes information of the multi-AP coordination group.

In some embodiments, in a case where the second AP is a management AP of the multi-AP coordination group, the above communication apparatus further includes: a receiving module 1302. The receiving module 1302 is configured to receive a second frame sent from the first AP. The second frame is used for requesting to join the multi-AP coordination group. The sending module 1301 is further configured to send a response frame to the second frame to the first AP. The response frame is used for indicating agreement to the first AP joining the multi-AP coordination group.

In some embodiments, in a case where the member identifier is an identifier allocated to the first AP by the management AP, the response frame includes the member identifier.

In some embodiments, in a case where the second AP is a management AP of the multi-AP coordination group, the above communication apparatus further includes: a deleting module 1303. The receiving module 1302 is further configured to receive a third frame sent from the first AP. The third frame is used for notifying the management AP that the first AP exits the multi-AP coordination group. The deleting module 1303 is configured to, in response to the third frame, delete a corresponding relationship between the member identifier and the first AP, or recycle the member identifier.

In some embodiments, in a case where the second AP is a management AP of the multi-AP coordination group, the receiving module 1301 is further configured to send a fourth frame to the first AP. The fourth frame is used for indicating the first AP to exit the multi-AP coordination group. The deleting module 1303 is further configured to delete a corresponding relationship between the member identifier and the first AP, or recycle the member identifier.

In some embodiments, the sending module 1301 is further configured to send a fifth frame to the first AP. The fifth frame is used for requesting the member identifier of the first AP in the multi-AP coordination group. The receiving module 1302 is further configured to receive a response frame from the first AP to the fifth frame. The response frame includes information of the multi-AP coordination group and the member identifier.

In some embodiments, the fifth frame is a probe request frame, and the response frame to the fifth frame is a probe response frame.

In some embodiments, the receiving module 1302 is further configured to receive a sixth frame sent from the first AP. The sixth frame includes information of the multi-AP coordination group and the member identifier.

In some embodiments, the sixth frame is a beacon frame.

In some embodiments, the information of the multi-AP coordination group includes at least one of: an identifier of the multi-AP coordination group, a member identifier of each member in the multi-AP coordination group.

In a case of implementing the functions of the above integrated modules in the form of hardware, the embodiments of the present disclosure provide another structure of the communication apparatus involved in the above embodiments. As shown in FIG. 14, the communication apparatus 140 includes: a processor 1402 and a bus 1404. In some embodiments, the communication apparatus may further include a memory 1401. In some embodiments, the communication apparatus may further include a communication interface 1403.

The processor 1402 may implement or perform various exemplary logic blocks, modules, and circuits described in conjunction with the embodiments of the present disclosure. The processor 1402 may be a central processing unit, a general-purpose processor, a digital signal processor, an application specific integrated circuit, a field programmable gate array or other programmable logic device, a transistor logic device, a hardware component, or any combination thereof, and it may implement or execute various exemplary logic blocks, modules, and circuits described in conjunction with the embodiments of the present disclosure. The processor 1402 may also be a combination for implementing computing functions, for example, a combination including one or more microprocessors, a combination of a DSP (Digital Signal Processor) and a microprocessor, etc.

The communication interface 1403 is configured to connect with other devices through a communication network. The communication network may be Ethernet, a radio access network, a wireless local area network (WLAN), or the like.

The memory 1401 may be a read-only memory (ROM) or other types of static storage devices that may store static information and instructions, a random access memory (RAM) or other types of dynamic storage devices that may store information and instructions, or may be an electrically erasable programmable read-only memory (EEPROM), a disk storage medium or other magnetic storage devices, or any other medium that can be used to carry or store desired program code in the form of instructions or data structures and can be accessed by a computer, but is not limited thereto.

As an implementation, the memory 1401 may exist independently of the processor 1402, and the memory 1401 may be connected to the processor 1402 via the bus 1404, for storing instructions or program code. When the processor 1402 calls and executes the instructions or program code stored in the memory 1401, the data transmission method provided in the embodiments of the present disclosure may be implemented.

In another implementation, the memory 1401 may also be integrated with the processor 1402.

The bus 1404 may be an extended industry standard architecture (EISA) bus or the like. The bus 1404 may be divided into an address bus, a data bus, a control bus, or the like. For ease of representation, only one thick line is used in FIG. 14 for representation, but it does not mean that there is only one bus or one type of bus.

In some embodiments, the memory 1401 stores executable instructions, and when the processor 1402 executes the executable instructions, the communication apparatus performs the data transmission method as described in any one of the above embodiments.

Some embodiments of the present disclosure provide a computer-readable storage medium (for example, a non-transitory computer-readable storage medium), the computer-readable storage medium stores computer program instructions, and when the computer program instructions run on a computer, the computer performs the data transmission method as described in any one of the above embodiments.

Exemplarily, the above computer-readable storage medium may include, but is not limited to: a magnetic storage device (for example, a hard disk, a floppy disk, or a magnetic tape), an optical disk (for example, a Compact Disk (CD), a Digital Versatile Disk (DVD)), a smart card and a flash memory device (for example, an Erasable Programmable Read-Only Memory (EPROM), a card, a stick, or a key drive, etc.). Various computer-readable storage media described in the present disclosure may represent one or more devices and/or other machine-readable storage media for storing information. The term "machine-readable storage medium" may include, but is not limited to, a wireless channel, and various other media capable of storing, containing, and/or carrying instructions and/or data.

The embodiments of the present disclosure provide a computer program product containing instructions, and when the computer program product runs on a computer, the computer performs the data transmission method as described in any one of the above embodiments.

In the technical solutions provided in the embodiments of the present disclosure, the first AP may receive a first frame sent from a second AP in the same multi-AP coordination group, and perform a data transmission on a target channel resource indicated by a member identifier in the first frame. That is, the first AP corresponds to a member identifier in the multi-AP coordination group, so that in the channel resource allocation, the first AP may determine its corresponding target channel resource based on the member identifier. In this way, it may be ensured that each AP in the multi-AP coordination may communicate on its corresponding channel resource, thereby avoiding channel occupancy conflicts.

The foregoing is only the detailed description of the present disclosure, but the protection scope of the present disclosure is not limited thereto, and any changes or replacements within the technical scope disclosed in the present disclosure shall be covered within the protection scope of the present disclosure. Therefore, the protection scope of the present disclosure shall be based on the protection scope of the claims.

## Claims

1. A data transmission method, applied to a first access point (AP), and comprising:
receiving a first frame sent from a second AP, wherein the second AP and the first AP belong to a same multi-AP coordination group, the first frame comprises a member identifier of the first AP in the multi-AP coordination group, and the first frame is used for allocating a target channel resource to the first AP based on the member identifier; and
performing a data transmission on the target channel resource.

2. The method according to claim 1, wherein the first frame is a trigger frame, or another control frame or management frame having a scheduling management function.

3. The method according to claim 1, wherein the member identifier is an identifier allocated to the first AP by a management AP in the multi-AP coordination group, or is a unique identifier of the first AP.

4. The method according to claim 3, wherein in a case where the member identifier is the identifier allocated to the first AP by the management AP, the first frame further comprises information of the multi-AP coordination group.

5. The method according to claim 1, further comprising:
sending a second frame to a management AP in the multi-AP coordination group, wherein the second frame is used for requesting to join the multi-AP coordination group;
receiving a response frame sent from the management AP to the second frame, wherein the response frame is used for indicating agreement to the first AP joining the multi-AP coordination group.

6. The method according to claim 5, wherein in a case where the member identifier is an identifier allocated to the first AP by the management AP, the response frame comprises the member identifier.

7. The method according to claim 5, wherein in a case where the member identifier is a unique identifier of the first AP, the method further comprises:
in response to the response frame, determining that the unique identifier of the first AP itself is the member identifier.

8. The method according to claim 1, further comprising:
sending a third frame to a management AP in the multi-AP coordination group, wherein the third frame is used for notifying the management AP that the first AP exits the multi-AP coordination group; and
deleting the member identifier.

9. The method according to claim 1, further comprising:
receiving a fourth frame sent from a management AP in the multi-AP coordination group, wherein the fourth frame is used for indicating the first AP to exit the multi-AP coordination group; and
in response to the fourth frame, deleting the member identifier.

10. The method according to claim 1, further comprising:
receiving a fifth frame sent from the second AP, wherein the fifth frame is used for requesting the member identifier of the first AP in the multi-AP coordination group; and
sending a response frame to the fifth frame to the second AP, wherein the response frame comprises information of the multi-AP coordination group and the member identifier.

11. The method according to claim 10, wherein the fifth frame is a probe request frame, and the response frame to the fifth frame is a probe response frame.

12. The method according to claim 1, further comprising:
in a case where the first AP belongs to the multi-AP coordination group, sending a sixth frame; wherein the sixth frame comprises information of the multi-AP coordination group and the member identifier.

13. The method according to claim 12, wherein the sixth frame is a beacon frame.

14. The method according to any one of claim 4, 10, or 12, wherein the information of the multi-AP coordination group comprises at least one of: an identifier of the multi-AP coordination group, a member identifier of each member in the multi-AP coordination group.

15. A data transmission method, applied to a second access point (AP), comprising:
sending a first frame to a first AP; wherein the second AP and the first AP belong to a same multi-AP coordination group, the first frame comprises a member identifier of the first AP in the multi-AP coordination group, and the first frame is used for allocating a target channel resource to the first AP based on the member identifier.

16. The method according to claim 15, wherein the first frame is a trigger frame, or another control frame or management frame having a scheduling management function.

17. The method according to claim 15, wherein the member identifier is an identifier allocated to the first AP by a management AP of the multi-AP coordination group, or is a unique identifier of the first AP.

18. The method according to claim 15, wherein in a case where the member identifier is an identifier allocated to the first AP by a management AP of the multi-AP coordination group, the first frame further comprises information of the multi-AP coordination group.

19. The method according to claim 15, wherein in a case where the second AP is a management AP of the multi-AP coordination group, the method further comprises:
receiving a second frame sent from the first AP, wherein the second frame is used for requesting to join the multi-AP coordination group; and
sending a response frame to the second frame to the first AP, wherein the response frame is used for indicating agreement to the first AP joining the multi-AP coordination group.

20. The method according to claim 19, wherein in a case where the member identifier is an identifier allocated to the first AP by the management AP, the response frame comprises the member identifier.

21. The method according to claim 15, wherein in a case where the second AP is a management AP of the multi-AP coordination group, the method further comprises:
receiving a third frame sent from the first AP, wherein the third frame is used for notifying the management AP that the first AP exits the multi-AP coordination group; and
in response to the third frame, deleting a corresponding relationship between the member identifier and the first AP, or recycling the member identifier.

22. The method according to claim 15, wherein in a case where the second AP is a management AP of the multi-AP coordination group, the method further comprises:
sending a fourth frame to the first AP, wherein the fourth frame is used for indicating the first AP to exit the multi-AP coordination group; and
deleting a corresponding relationship between the member identifier and the first AP, or recycling the member identifier.

23. The method according to claim 15, further comprising:
sending a fifth frame to the first AP, wherein the fifth frame is used for requesting the member identifier of the first AP in the multi-AP coordination group; and
receiving a response frame from the first AP to the fifth frame, wherein the response frame comprises information of the multi-AP coordination group and the member identifier.

24. The method according to claim 23, wherein the fifth frame is a probe request frame, and the response frame to the fifth frame is a probe response frame.

25. The method according to claim 15, further comprising:
receiving a sixth frame sent from the first AP; wherein the sixth frame comprises information of the multi-AP coordination group and the member identifier.

26. The method according to claim 25, wherein the sixth frame is a beacon frame.

27. The method according to any one of claim 18, 23, or 25, wherein the information of the multi-AP coordination group comprises at least one of: an identifier of the multi-AP coordination group, a member identifier of each member in the multi-AP coordination group.

28. A communication apparatus, comprising: a processor, and a memory for storing instructions executable by the processor;
wherein the processor is configured to execute the instructions to cause the communication apparatus to perform the data transmission method according to any one of claims 1 to 27.

29. A computer-readable storage medium, wherein computer instructions are stored on the computer-readable storage medium, and when the computer instructions run on a communication apparatus, the communication apparatus performs the data transmission method according to any one of claims 1 to 27.
